(19) Europäisches Patentamt
European Patent Office
Office européen des brevets

(11) **EP 0 566 851 B1**

(12) **EUROPÄISCHE PATENTSCHRIFT**

(45) Veröffentlichungstag und Bekanntmachung des Hinweises auf die Patenterteilung:
**29.07.1998 Patentblatt 1998/31**

(51) Int Cl.$^6$: **C07F 5/06**

(21) Anmeldenummer: **93103725.3**

(22) Anmeldetag: **09.03.1993**

(54) **Verfahren zur Herstellung von Trimethylaluminium durch Reaktion von Methylaluminiumchloriden mit Natrium in Feststoffreaktoren**

Process for the preparation of trimethylaluminum by the reaction of methylaluminum chloride with sodium in a reactor for solids

Procédé pour la préparation de triméthylaluminium par la réaction de chlorure de méthylaluminium avec sodium dans un réacteur pour des solides

(84) Benannte Vertragsstaaten:
**AT BE DE ES FR GB IT NL SE**

(30) Priorität: **22.04.1992 DE 4213202**

(43) Veröffentlichungstag der Anmeldung:
**27.10.1993 Patentblatt 1993/43**

(73) Patentinhaber: **Witco GmbH**
**59180 Bergkamen (DE)**

(72) Erfinder:
• **Gürtzgen, Stefan, Dr. Dipl.-Chem.**
**W-5600 Wuppertal 21 (DE)**

• **Schneider, Jürgen, Dipl.-Ing.**
**W-4750 Unna (DE)**
• **Schrader, Rolf, Dr. Dipl.-Chem.**
**W-4750 Unna (DE)**

(56) Entgegenhaltungen:
**GB-A- 772 174          GB-A- 980 765**
**US-A- 2 954 389**

• **BAHR, G. ET AL. 'METHODEN DER ORGANISCHEN CHEMIE (HOUBEN-WEYL)' 1970 , GEORG THIEME VERLAG , STUTTGART/NEW YORK**

**Beschreibung**

Trimethylaluminium (TMA) gewinnt in zunehmendem Maße an Interesse aufgrund seiner vielseitigen Anwendungsmöglichkeiten im Bereich der Halbleiterelektronik, Galvanoaluminierung sowie Katalyse zur Polyolefinherstellung.

In der Literatur sind zahlreiche Methoden zur Herstellung von TMA beschrieben. Als Beispiele aufgeführt seien US-A-2 744 127; US-A-2 839 556; Adv. Inorg. Chem. Radiochem. 7, 269 (1967); K. Ziegler, Organomet. Chem., ACS Monograph No. 147, 197 (1960).

In industriellem Maßstab erfolgt die Herstellung von TMA üblicherweise durch Reduktion von Methylaluminiumchloriden, bevorzugt Dimethylaluminimchlorid (DMAC), mit geschmolzenem metallischem Natrium, dispergiert in einem inerten Kohlenwasserstoff, wie Tetralin, n-Decan, n-Heptan etc. gemäß Reaktionsgleichung (1)

$$3 \, Me_{3-x}AlCl_x + 3x \, Na \rightarrow$$

$$(3-x) \, Me_3Al + {}_x \, Al + 3x \, NaCl.$$

Die einzusetzenden Methylaluminiumchloride umfassen Dimethylaluminiumchlorid (DMAC) sowie Methylaluminiumsesquichlorid.

Aufgrund von Passivierungseffekten infolge Abscheidung von Reaktionsnebenprodukten (NaCl,Al) auf der Oberfläche des Natriums sind die Ausbeuten jedoch mäßig (47 - 85 %), und das gewonnene TMA ist durch Restmengen des Ausgangsproduktes DMAC sowie des häufig in großen Mengen als Suspendierhilfsmittel eingesetzten inerten Kohlenwasserstoffs.kontaminiert. Darüberhinaus gehen die Bestrebungen aus Gründen der Umweltbelastung und der Arbeitssicherheit dahin, auf leicht brennbare und toxikologisch bedenkliche Lösungsmittel ganz zu verzichten.

Die Verwendung von Natrium im Überschuß fördert die Bildung komplexer Alkyle, wodurch die Ausbeute zusätzlich gemindert wird:

$$4 \, Me_3Al + 3 \, Na \rightarrow 3 \, NaAlMe_4 + Al \tag{2}$$

Darüber hinaus werden Reaktorverkrustungen sowie Entsorgungs- und Sicherheitsprobleme aufgrund von inkludiertem Natrium beobachtet. US-A-5 015 750 beschreibt ein Verfahren, bei dem TMA aus Methylaluminiumchloriden und Natrium in Ausbeuten von ca. 90 % ohne Einsatz von Natrium im Überschuss erhalten wird. Das Produkt enthält lediglich ca. 0,03 % Chlor und die Synthese benötigt deutlich weniger Suspendierhilfsmittel als vergleichbare Prozesse. Solche positiven Ergebnisse werden jedoch nur in Gegenwart von 1 - 10 % Katalysatoren wie Alkali- bzw. Erdalkalifluoriden erzielt, die wiederum bei der Entsorgung zu berücksichtigen sind.

Außerdem wird bei der vorgeschlagenen Verfahrensweise DMAC und Natrium parallel dosiert. Hierbei wird Natrium durch den Gasraum auf die Flüssigkeitsoberfläche dosiert. Wird Natrium, z. B. durch einen Rührer, an der Reaktorwandung oberhalb der Flüssigkeitsoberfläche verteilt, so reagiert das Natrium sofort mit dem in der Gasphase vorhandenen DMAC. Bei diesem sich immer wiederholenden Prozeß bauen sich große Ablagerungen auf.

Überraschenderweise wurde nun gefunden, daß man diese verfahrenstechnischen Nachteile durch Verwendung von Feststoffreaktoren überwinden kann. Dies war aufgrund der geringen Umdrehungsgeschwindigkeit, mit der diese Reaktoren ausgelegt sind, nicht zu erwarten, da bekannterweise die ausreichend gleichmäßige Verteilung des Natriums oder Magnesiums im Reaktionsgemisch besondere Auswirkungen auf die Qualität des Endproduktes hat.

Gegenstand der Erfindung ist daher ein Verfahren zur Herstellung von Trimethylaluminium aus Methylaluminiumchloriden und Natrium oder Magnesium, welches dadurch gekennzeichnet ist, daß die Komponenten in einem Feststoffreaktor umgesetzt werden.

Ein weiterer Gegenstand der Erfindung ist ein Verfahren zur Herstellung von Trimethylaluminium, welches dadurch gekennzeichnet ist, daß die Methylaluminiumchloride, vorzugsweise Dimethylaluminiumchlorid, und Natrium oder Magnesium bei 100 - 190 °C und Drücken von 0 - 5 bar 4 - 8 h in einem Feststoffreaktor umgesetzt und das entstandene Trimethylaluminium destillativ entfernt wird.

Feststoffreaktoren im Sinne der vorliegenden Erfindung sind Reaktoren, welche aufgrund ihrer Bauart geeignet sind, Mischungen mit hohen Feststoffanteilen bzw. Trockenmischungen umzuwälzen.

Reaktoren, die dieser Aufgabe gewachsen sind, müssen besondere Bedingungen erfüllen:

Das Rührorgan muß der besonderen Aufgabe leistungsmäßig und konstruktiv angepaßt sein, das heißt, die Anzahl und die Anordnung von auf der Rührwelle befindlichen Rührelementen muß eine ausreichende Durchmischung des Reaktorinhaltes gewährleisten; besonders wichtig ist in diesem Zusammenhang, daß die Reaktorwandung sowie die Rührwellenoberfläche von Feststoffablagerungen und -verkrustungen freigehalten werden, da sonst keine homogene Durchmischung erzielt werden kann. Im Falle des erfindungsgemäß bevorzugt verwendeten Discotherm-Apparates DTB 20 der Firma List, Schweiz, wird diese Eigenschaft durch zusätzlich im Reaktormantel feststehend eingebaute Haken erreicht, die aufgrund des geringen Abstandes zu den rotierenden Rührelementen dazu beitragen, daß während der Reaktion auftretende Agglomerate wegen der in diesen Bereichen hohen Scherbeanspruchung wieder aufgebrochen werden. Darüberhinaus ist es von Vorteil, wenn nicht nur die Reaktorwandung, sondern auch die Rührwelle beheizt werden kann, weil dadurch Verkrustungen und Ablagerungen vermindert werden.

Das im erfindungsgemäßen Verfahren als Edukt verwendete Dimethylaluminiumchlorid sowie das Methylaluminiumsesquichlorid sind handelsübliche Produkte.

Als Magnesium werden die handelsüblichen Pulverqualitäten verwendet, vorzugsweise solche mit Reinheitsgehalten >99 % und Korngrößen $\leq100$ µm, insbesondere <75 µm.

Zur Durchführung der Reaktion werden in dem mit Inertgas gespülten Feststoffreaktor die Methylaluminiumchloride vorgelegt und unter Rühren auf Reaktionstemperaturen von 100 - 190 °C, vorzugsweise 120 - 150 °C, aufgeheizt, das Natrium in fester oder vorzugsweise in geschmolzener Form kontinuierlich oder portionsweise zudosiert und die Reaktion bei 120 - 150 °C 3 - 6 h, vorzugsweise ca. 4 h weitergeführt. Dabei wird der sich aufgrund der Temperaturen aufbauende Gesamtdruck (Summe der Partialdrücke aus Methylaluminiumchloriden und Trimethylaluminium Kp 126/127 °C) während der Reaktionszeit aufrechterhalten. Das entstandene Trimethylaluminium wird anschließend abdestilliert, wobei zur vollständigen Entfernung des Trimethylaluminiums Drücke von $\leq10^{-3}$ bar vorteilhaft sind.

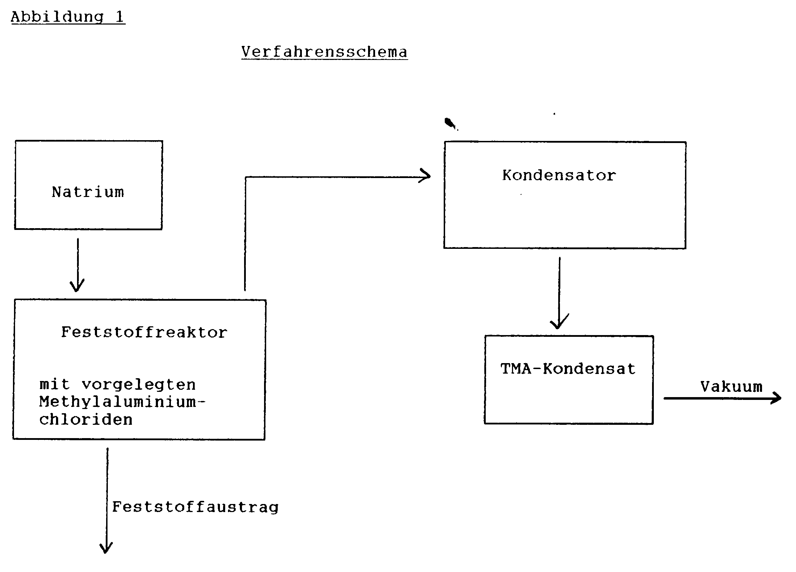

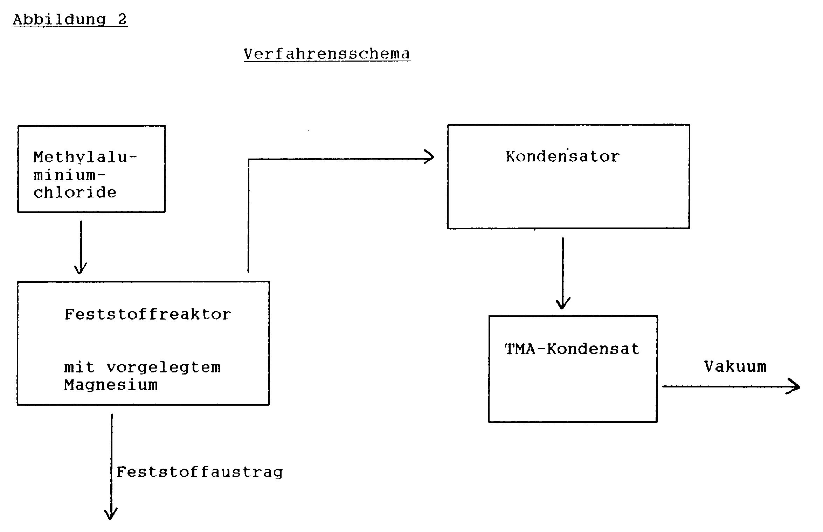

Während dieser Phase findet eine Entfeuchtung des Reaktionsgemisches bis zu einem Feststoffgehalt von ca. 100 % statt. Der pulverförmige Rückstand wird weitgehend über die Entleerungsarmatur ausgetragen (Abbildung 1). Danach verbliebene Rückstände beeinflussen die Reaktion nicht negativ, so daß sie im Reaktor belassen werden können und dieser ohne weitere Reinigung beliebig oft neu beschickt werden kann.

Das nach der Destillation vorliegende Trimethylaluminium ist von hoher Reinheit und erfordert in der Regel keine Nachbehandlung, da die Reaktion erfindungsgemäß ohne die sonst erforderlichen Suspensionsmittel durchgeführt wird.

Die Mitverwendung von Suspendierungsmitteln ist zwar möglich, bei den verwendeten Feststoffreaktoren in der Regel nur nachteilig, da einmal die Reinheit des Destillationsproduktes nachteilig beeinflußt wird und zum anderen höhere Rückstandsmengen anfallen, die darüberhinaus zusätzliche Entsorgungskosten verursachen.

Natrium wird erfindungsgemäß im Überschuß bis zu 10 Mol-%, bezogen auf die stöchiometrischen Mengen, eingesetzt. Größere Überschüsse sind aufgrund der ablaufenden Nebenreaktionen sowie des verbleibenden Restgehaltes an metallischem Natrium im Destillationsrückstand verfahrenstechnisch ungünstig. Magnesium wird im Überschuß bis zu 60 Mol-%, vorzugsweise 20 - 50 Mol-%, bezogen auf die stöchiometrischen Mengen, verwendet. Zur Erzielung kürzerer Reaktionszeiten sollte der Überschuß im oberen angegebenen Bereich liegen.

Erfindungsgemäß bevorzugt wird flüssiges Natrium in Mengen von 0 - 5 Mol-% Überschuß, bezogen auf die stöchiometrischen Mengen.

Bei Verwendung von metallischem Magnesium wird so verfahren, daß in dem mit Inertgas gespülten Feststoffreaktor das Magnesiumpulver vorgelegt, unter Rühren auf Reaktionstemperaturen von 100 - 190 °C, vorzugsweise 140 - 180 °C, aufgeheizt und das Dimethylaluminiumchlorid vorzugsweise kontinuierlich zudosiert wird. Die Reaktion wird 3 - 6 h bei dem sich einstellenden Gesamtdruck weitergeführt, und die Isolierung des Reaktionsproduktes erfolgt analog den oben aufgeführten Bedingungen.

Die Reaktion wird vorzugsweise bei Temperaturen von 120 - 180 °C durchgeführt. Es wurde gefunden, daß bei Verwendung von stöchiometrischen Mengen an Natrium oder Magnesium im allgemeinen höhere Temperaturen und/ oder längere Reaktionszeiten für eine optimale Umsetzung erforderlich sind. Bei Verwendung von Magnesium liegen Reaktionstemperaturen und Reaktionszeiten im Bereich oberhalb des für Natrium bevorzugten Bereichs.

Beispiele

Beispiel 1

In dem mit Stickstoff inertisierten Reaktor (Discotherm DTB 20) wurden 9,04 kg Dimethylaluminiumchlorid (DMAC) eingefüllt und auf 120 °C erhitzt. Bei laufender Rührwelle des Reaktors (8 Umdrehungen/min) wurden in 140 min 2,46 kg geschmolzenes Natrium in zehn Portionen zugegeben. Die Reaktortemperatur betrug während der Natriumzugabe 121 - 131 °C. Danach wurde der Reaktorinhalt auf 150 °C aufgeheizt und 4 h bei dieser Temperatur gehalten. Während der Dosierung und der Nachreaktion stellte sich ein Überdruck im Reaktor von bis zu 3 bar ein. Um das gebildete Trimethylaluminium (TMA) aus dem Reaktionsgemisch zu entfernen, wurde der Reaktor anschließend bei Reaktionstemperatur auf Normaldruck entspannt, wobei der entweichende TMA-Dampf in einem nachgeschalteten Kondensator verflüssigt und in einer Vorlage aufgegangen wurde. Die weitere TMA-Isolierung erfolgte durch Vakuumverdampfung bei 140 - 150 °C bei bis zu 1 mbar.

Ausbeute:     4,1 kg TMA-Destillat = 87,3 % der Theorie

Chlorgehalt (% Cl):          0,0
Aluminiumgehalt (% Al):      37,1

Der Trockenrückstand (ca. 100 % Feststoffgehalt) wurde auf Raumtemperatur abgekühlt und über die Entleerungsarmatur ausgetragen.

Beispiel 2

Durchführung wie in Beispiel 1 mit der Abwandlung, daß das Natrium kontinuierlich zugegeben wurde.

Ausbeute:     4,3 kg TMA-Destillat = 91,6 % der Theorie

% Cl:    0,0
% Al:    37,2

Beispiel 3

Durchführung gemäß Beispiel 1, mit der Abänderung, daß ein Zyklus von 5 unmittelbar aufeinanderfolgenden Einzelansätzen (ohne zwischenzeitliche Reinigung des Reaktors) gefahren wurde.
Ergebnis des 5. Einzelansatzes:

Ausbeute:     4,15 kg TMA-Destillat = 88,4 % der Theorie

% Cl:    <0,05
% Al     37,1 37,1

**Patentansprüche**

1. Verfahren zur Herstellung von Trimethylaluminium aus Methylaluminiumchloriden und Natrium oder Magnesium, dadurch gekennzeichnet, daß die Komponenten in einem Feststoffreaktor umgesetzt werden.

2. Verfahren zur Herstellung von Trimethylaluminium gemäß Anspruch 1, dadurch gekennzeichnet, daß Methylaluminiumchloride und Natrium oder Magnesium bei 100 - 190 °C 3 - 8 h in einem Feststoffreaktor umgesetzt und das entstandene Trimethylaluminium destillativ entfernt wird.

3. Verfahren gemäß den Ansprüchen 1 und 2, dadurch gekennzeichnet, daß die Reaktion mit 0 - 10 Mol-% Überschuß an Natrium, bezogen auf die stöchiometrischen Mengen, bei Temperaturen von 120 - 180 °C durchgeführt werden.

4. Verfahren gemäß den Ansprüchen 1 und 2, dadurch gekennzeichnet, daß die Reaktion mit 0 - 60 Mol-% Überschuß, bezogen auf die stöchiometrischen Mengen, an Magnesium bei Temperaturen von 140 - 150 °C durchgeführt wird.

5. Verfahren gemäß den Ansprüchen 1 bis 4, dadurch gekennzeichnet, daß das Verfahren mit Dimethylaluminiumchlorid durchgeführt wird.

**Claims**

1. Process for preparing trimethylaluminium from methylaluminium chlorides and sodium or magnesium, characterized in that the components are reacted in a solid-state reactor.

2. Process for preparing trimethylaluminium according to Claim 1, characterized in that methylaluminium chlorides and sodium or magnesium are reacted at 100-190°C for 3-8 hours in a solid-state reactor and the resulting trimethylaluminium is removed by distillation.

4

3. Process according to Claim 1 or 2, characterized in that the reaction is carried out using a 0-10 mol% excess of sodium, based on the stochiometric amounts, at temperatures of 120-180°C.

4. Process according to Claim 1 or 2, characterized in that the reaction is carried out using a 0-60 mol% excess of magnesium, based on the stochiometric amounts, at temperatures of 140-150°C.

5. Process according to any of Claims 1 to 4, characterized in that the process is carried out using dimethylaluminium chloride.

## Revendications

1. Procédé de préparation de triméthylaluminium à partir de chlorure de méthylaluminium et de sodium ou de magnésium, caractérisé en ce que les composants sont mis à réagir dans un réacteur pour solides.

2. Procédé de préparation de triméthylaluminium suivant la revendication 1, caractérisé en ce que le chlorure de méthylaluminium et le sodium ou le magnésium sont mis à réagir dans un réacteur pour solides à 100 à 190°C durant 3 à 8 h et en ce que le triméthylaluminium formé est retiré par distillation.

3. Procédé suivant les revendications 1 et 2, caractérisé en ce que la réaction est réalisée avec 0 à 10% en moles d'excès de sodium, par rapport aux quantités stoechiométriques, à des températures de 120 à 180°C.

4. Procédé suivant les revendications 1 et 2, caractérisé en ce que la réaction est réalisée avec 0 à 60% en moles d'excès de sodium, par rapport aux quantités stoechiométriques, à des températures de 140 à 150°C.

5. Procédé suivant les revendications 1 à 4, caractérisé en ce que le procédé est réalisé avec du chlorure de diméthylaluminium.

## Abbildung 1

### Verfahrensschema

```
┌──────────────┐                    ┌────────────────────┐
│   Natrium    │         ┌─────────▶│    Kondensator     │
└──────────────┘         │          └────────────────────┘
       │                 │                     │
       ▼                 │                     ▼
┌──────────────────┐     │          ┌────────────────────┐
│ Feststoffreaktor │─────┘          │   TMA-Kondensat    │──▶ Vakuum
│                  │                └────────────────────┘
│ mit vorgelegten  │
│ Methylaluminium- │
│ chloriden        │
└──────────────────┘
       │
       ▼
  Feststoffaustrag
```

EP 0 566 851 B1

Abbildung 2

Verfahrensschema

Methylaluminium-chloride → Feststoffreaktor mit vorgelegtem Magnesium → Feststoffaustrag

Kondensator → TMA-Kondensat → Vakuum